# EUROPEAN PATENT SPECIFICATION

(11) **EP 2 029 855 B1**
(45) Date of publication and mention of the grant of the patent: **28.07.2010**
(21) Application number: 07733266.6
(22) Date of filing: 18.06.2007
(51) Int. Cl.: E21B 10/573

(54) **PCD CUTTERS WITH ENHANCED WORKING SURFACES ADJACENT A CAVITY**
PCD SCHNEIDVORRICHTUNGEN MIT VERBESSERTEN ARBEITSFLÄCHEN NEBEN EINEM HOHLRAUM
OUTILS DE COUPE AU DIAMANT POLYCRISTALLIN (PCD) AVEC SURFACES D'USINAGE AMÉLIORÉES ADJACENTES À UNE CAVITÉ

(30) Priority: 20.06.2006 GB 0612176
(43) Date of publication of application: 04.03.2009
(73) Proprietor: ReedHycalog UK Limited, Stonehouse, Gloucestershire GL10 3RQ (GB)
(72) Inventor: GRIFFIN, Nigel, Dennis, Nympsfield, Gloucestershire, GL10 3UB (GB); HUGHES, Peter, Raymond, Stroud, Gloucestershire GL5 4SG (GB)
(74) Representative: Bailey, Richard Alan
(86) International application number: PCT/GB2007/002263
(87) International publication number: WO 2007/148060

(56) References cited:
- EP-A- 0 989 282
- EP-A- 1 190 791
- EP-A1- 0 322 214
- WO-A-2004/106004
- BE-A3- 1 012 119
- GB-A- 2 295 837
- US-A- 5 373 908
- US-A- 5 887 580
- US-A- 6 068 071
- US-A1- 2005 230 156
- US-B1- 6 258 139

## Description

### BACKGROUND OF THE INVENTION

The invention relates to superhard polycrystalline material elements for earth drilling, cutting, and other applications where engineered superhard surfaces are needed. The invention particularly relates to polycrystalline diamond and polycrystalline diamond-like (collectively called PCD) element with enhanced impact toughness.

Polycrystalline diamond and polycrystalline diamond-like elements are known, for the purposes of this specification, as PCD elements. PCD elements are formed from carbon based materials with exceptionally short inter-atomic distances between neighboring atoms. One type of diamond-like material similar to PCD is known as carbonitride (CN) described in U.S Patent No. 5,776,615. In general, PCD elements are formed from a mix of materials processed under high-temperature and high-pressure into a polycrystalline matrix of inter-bonded superhard carbon based crystals. A common trait of PCD elements is the use of catalyzing materials during their formation, the residue from which often imposes a limit upon the maximum useful operating temperature of the element while in service.

A well known, manufactured form of PCD element is a two-layer or multi-layer PCD element where a facing table of polycrystalline diamond is integrally bonded to a substrate of less hard material, such as tungsten carbide. The PCD element may be in the form of a circular or part-circular tablet, or may be formed into other shapes, suitable for applications such as hollow dies, heat sinks, friction bearings, valve surfaces, indentors, tool mandrels, etc. PCD elements of this type may be used in almost any application where a hard wear and erosion resistant material is required. The substrate of the PCD element may be brazed to a carrier, often also of cemented tungsten carbide. This is a common configuration for PCD's used as cutting elements, for example in fixed cutter or rolling cutter earth boring bits when received in a socket of the drill bit, or when fixed to a post in a machine tool for machining.

PCD elements are most often formed by sintering diamond powder with a suitable binder-catalysing material in a high-pressure, high-temperature press. One particular method of forming this polycrystalline diamond is disclosed in US Patent No. 3141746. In one common process for manufacturing PCD elements, diamond powder is applied to the surface of a preformed tungsten carbide substrate incorporating cobalt. The assembly is then subjected to very high temperature and pressure in a press. During this process, cobalt migrates from the substrate into the diamond layer and acts as a binder-catalysing material, causing the diamond particles to bond to one another with diamond-to-diamond bonding, and also causing the diamond layer to bond to the substrate.

The completed PCD element has at least one body with a matrix of diamond crystals bonded to each other with many interstices containing a binder-catalysing material as described above. The diamond crystals comprise a first continuous matrix of diamond, and the interstices form a second continuous matrix of interstices containing the binder-catalyzing material. In addition, there are necessarily a relatively few areas where the diamond-to-diamond growth has encapsulated some of the binder-catalyzing material. These 'islands' are not part of the continuous interstitial matrix of binder-catalyzing material.

In one common form, the diamond body constitutes 85% to 95% by volume and the binder-catalyzing material the other 5% to 15%. Such an element may be subject to thermal degradation due to differential thermal expansion between the interstitial cobalt binder-catalyzing material and diamond matrix beginning at temperatures of about 400 degrees C. Upon sufficient expansion the diamond-to-diamond bonding may be ruptured and cracks and chips may occur.

A common problem with these PCD elements, especially when used in highly abrasive cutting application, such as in drill bits, has been the limitation imposed between wear resistance and impact strength. This relationship has been attributed to the fact that the catalyzing material remaining in the interstitial regions among the bonded diamond crystals contributes to the degradation of the diamond layer.

It has become well known in the art to preferentially remove this catalyzing material from a portion of the working surface in order to form a surface with much higher abrasion resistance without substantially reducing its impact strength. This new type of PCD element is described in U.S. Patent Nos. 6,601,662; 6,592,985 and 6,544,308.

PCD elements made in accordance with these and in other related patents have become widely used in the oilfield drilling industry. One surprising observation resulting from this usage, however, has been an increase in the cutting efficiency of these cutters, which has been manifested in higher drilling rates of penetration - typically by 40%, but occasionally by as much as a factor of two to four times.

US 4976324 describes an arrangement in which a vapor deposition technique is used to apply a catalyst free diamond layer to a surface of a cutting element, but it will be appreciated that the vapor deposition technique used does not bond the diamond layer to the underlying diamond table. US 6068913 and US 4766040 both describe multi-layered elements, and US 6187068 describes providing the element with concentric ring shaped regions of different abrasion resistance.

An arrangement is described in US 6189634 in which, when worn, part of the substrate of a cutting element becomes exposed at the working surface.

### BRIEF SUMMARY OF THE INVENTION

The present invention is a PCD cutting element, in which a cavity is formed in the substrate in an area immediately adjacent the peripheral working surface and treating the PCD exposed in this cavity to render it and at least part of each of the end working surfaces and the peripheral working surface of the cutting element more abrasion resistant without substantially reducing its impact strength.

One particularly advantageous use of this new PDC cutting element is as cutting elements for earth boring drill bits.

WO 2004/106004 describes a cutting element in which substantially no catalyzing material is present close to a working surface thereof.

According to the present invention there is provided a cutting element comprising a table of superhard material bonded to a substrate of less hard material, the table of superhard material defining a plurality of interstices containing a catalyzing material, the table of superhard material defining a first end working surface and a peripheral working surface extending to the substrate at least part of the first end working surface and at least a portion of the peripheral working surface are substantially free of catalyzing material, and **characterised in that** the peripheral working surface is substantially free of catalyzing material to a second end working surface of the table of superhard material which is exposed by a single cavity formed in the substrate, the single cavity being formed about the entire periphery of the substrate.

The catalyst free or substantially free parts may extend along the peripheral working surface from the face of the table all the way to a second end working surface of the table of superhard material which is exposed by the cavity formed in the substrate.

The element may have an edge of the part of the first end working surface which is substantially free of catalysing material which defines a first protruding lip, and an edge of the part of the peripheral working surface which is substantially free of catalyzing material defining a second protruding lip. The first end working surface may be substantially planar, and the peripheral working surface may be substantially perpendicular thereto. The superhard material may be polycrystalline diamond, and may incorporate regions of different abrasion resistance, for example arranged in a series of layers, or in a series of concentric rings. The table of superhard material may incorporate encapsulated diamond material, for example made using powdery carbonate. A region of superhard material containing catalyzing material may be exposed between the parts of the peripheral working surface and the first end working surface which are substantially free of catalyzing material. The first protruding lip may be formed adjacent said region at an edge of the part of the first end working surface which is substantially free of catalyzing material and the second protruding lip may be formed adjacent said region at an edge of the part of the peripheral working surface which is substantially free of catalyzing material.

The element may be used as a cutting element for an earth boring drill bit.

The invention also relates to a method of manufacturing a cutting element comprising forming a table of superhard material bonded to a less hard substrate, the table of superhard material defining a plurality of interstices containing a catalyzing material, the table defining a first end working surface and a peripheral working surface and characterised by, forming a single cavity in the substrate in an area immediately adjacent the peripheral working surface, formed about the entire periphery of the substrate, and treating at least part of each of the end working surface and the peripheral working surface to remove the catalyzing material therefrom to form a second end working surface of the table of superhard material which is exposed by the cavity formed in the substrate.

### BRIEF DESCRIPTION OF THE DRAWINGS

Figure 1 is a perspective view of a PCD element of an embodiment of the present invention in the form of a planar-face cutting element.
Figure 2 is a perspective view of a fixed cutter drill bit suitable for using the PCD elements of the present invention.
Figure 3 is a perspective view of a PCD element of the present invention in the form of a domed-face cutting element.
Figure 4 is a perspective view of a rolling cutter drill bit suitable for using the PCD elements of the present invention.
Figure 5 is a section view of a prior art PCD cutting element.
Figure 6 is a perspective view of a prior art planar face PCD cutting element drilling into the earth.
Figure 7 is a section view of a planar face PCD cutting element of the prior art.
Figure 8 is a diagrammatic sectional view of the prior art cutter of figure 7 in a worn condition.
Figure 9 is a diagrammatic view illustrating the structure of part of a cutter.
Figure 10 is a sectional view of a cutter showing a cavity formed in the substrate.
Figure 11 is a perspective view of another PCD element in the form of a planar-face cutting element showing cavities formed in the substrate.
Figure 12 is a perspective view of a PCD element of an embodiment of the present invention in the form of a planar-face cutting element showing a single cavity formed in the substrate.

### DETAILED DESCRIPTION OF THE INVENTION AND THE PREFERRED

### EMBODIMENT

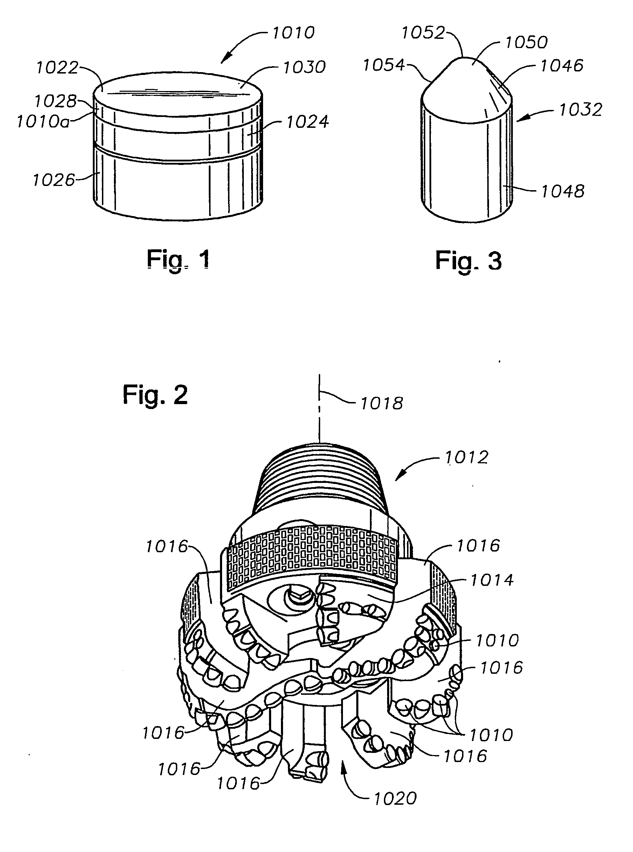

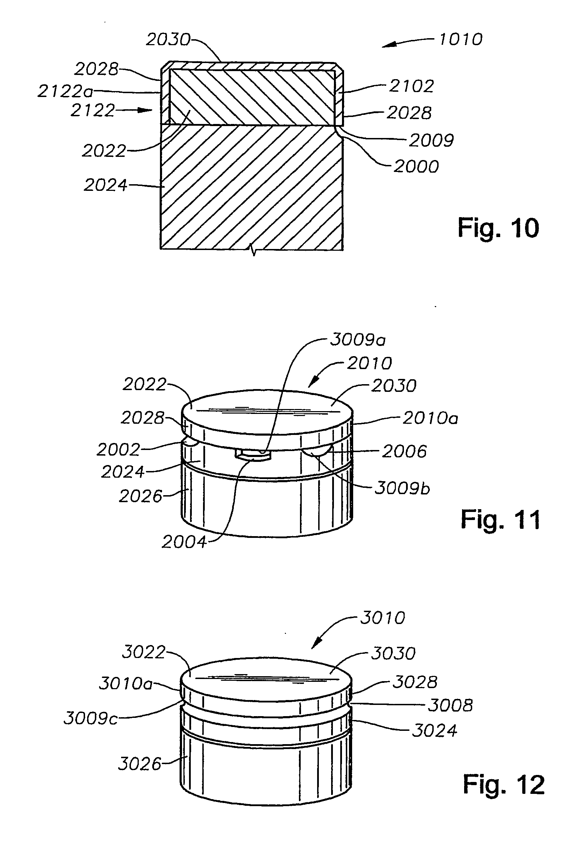

Referring now to Figures 1-4, the polycrystalline diamond or polycrystalline diamond-like (PCD) element 1010, 2122 (in Fig. 10), 2010 (in Fig. 11). 3010 (in Fig. 12), may be a preform cutting element 1010, 2122 (in Fig. 10), 2010 (in Fig. 11), 3010 (in Fig. 12), for a fixed cutter rotary drill bit 1012 (as shown in Figure 2). The bit body 1014 of the drill bit is formed with a plurality of blades 1016 extending generally outwardly away from the central longitudinal axis of rotation 1018 of the drill bit. Spaced apart side-by-side along the leading face 1020 of each blade is a plurality of the PCD cutting elements 1010, 2122 (in Fig 10), 2010 (in Fig. 11), 3010 (in Fig. 12).

Typically, the PCD cutting element 1010, 2010, 2122, 3010 has a body 1010a, 2010a, 2122a, 3010a in the form of a circular tablet having a relatively thin front facing table 1022, 2022 (in Figs. 10 and 11), 3022 (in Fig. 12) of diamond or diamond-like (PCD) superhard material, bonded in a high-pressure high-temperature press to a substrate 1024, 2024 (in Figs. 10 and 11), 3024 (in Fig. 12), of less hard material such as cemented tungsten carbide or other metallic material. The cutting element 1010, 2010, 2122, 3010 is preformed and then typically bonded on a generally cylindrical carrier 1026, 2026 (in Fig. 11), 3026 (in Fig. 12) which is also formed from cemented tungsten carbide, or may alternatively be attached directly to the blade 1016. The PCD cutting element 1010, 2010 (in Fig. 11), 2122 (in Fig. 10), 3010 (in Fig. 12) has peripheral and end working surfaces 1028, 2028 (in Figs. 10 and 11), 3028 (in Fig. 12) and 1030,2030 (in Figs. 10 and 11), 3030 (in Fig. 12) which, as illustrated, are substantially perpendicular to one another.

The cylindrical carrier 1026, 2026, 3026 is received within a correspondingly shaped socket or recess in the blade 1016. The carrier 1026, 2026, 3026 will usually be brazed, shrink fit or press fit in the socket. Where brazed, the braze joint may extend over the carrier 1026, 2026, 3026 and part of the substrate 1024, 2024, 3024. In operation the fixed cutter drill bit 1012 is rotated and weight is applied. This forces the cutting elements 1010, 2010, 2122, 3010 into the earth being drilled, effecting a cutting and/or drilling action.

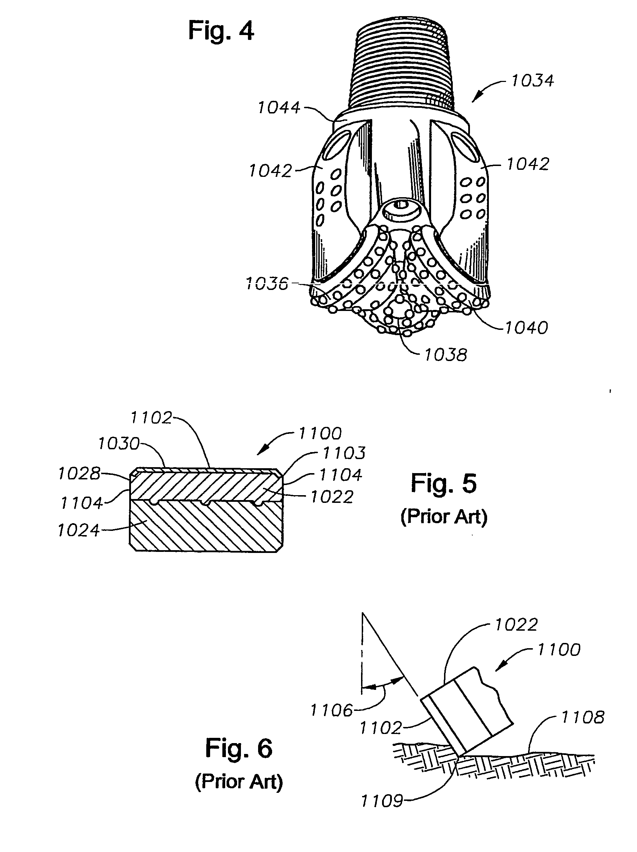

In a second embodiment, a shaped cutting element 1032 (as shown in Figure 3) is provided on a rolling cutter type drill bit 1034, shown in Figure 4. A rolling cutter drill bit 1034 typically has one or more truncated rolling cone cutters 1036, 1038, 1040 assembled on a bearing spindle on the leg 1042 of the bit body 1044. The cutting elements 1032 may be mounted, for example by press fitting as one or more of a plurality of cutting inserts arranged in rows on rolling cutters 1036, 1038, 1040, or alternatively the PCD cutting elements 1032 may be arranged along the leg 1042 of the bit 1034. The PCD cutting element 1032 has a body in the form of a facing table 1046 of diamond or diamond like material bonded to a less hard substrate 1048. The facing table 1046 in this embodiment is in the form of a convex surface 1050 and has peripheral and end working surfaces 1052 and 1054. Typically, there may be a number of transitional layers between the facing table 1046 and the substrate 1048 to help more evenly distribute the stresses generated during fabrication, as is well known to those skilled in the art. The end working surface 1052 is of domed or part-spherical form whilst the peripheral working surface 1054 is of frusto-conical form.

In operation the rolling cutter drill bit 1034 is rotated and weight is applied. This forces the cutting inserts 1032 in the rows of the rolling cone cutters 1036, 1038, 1040 into the earth, and as the bit 1034 is rotated the rolling cutters 1036, 1038, 1040 turn, effecting a drilling action.

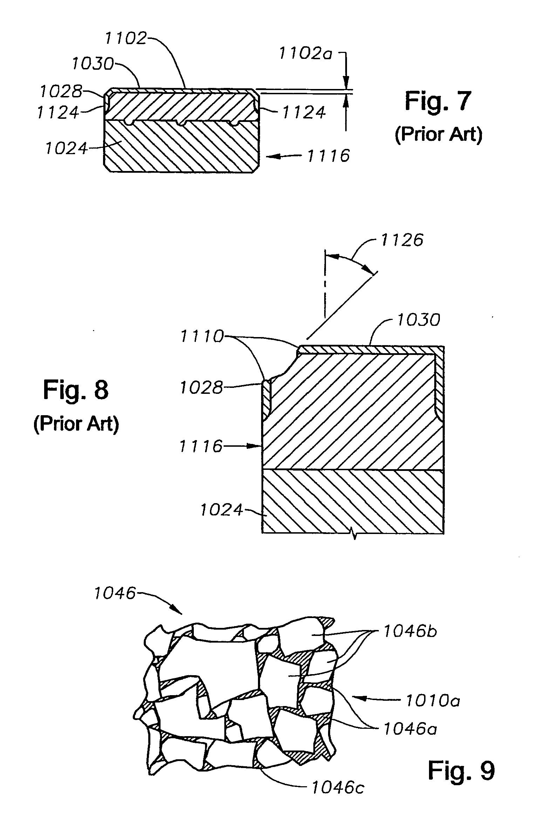

As illustrated in Figure 9, the structure of the table 1046 defines a series of interstices 1046a between the diamond crystals 1046b, the interstices 1046a containing binder catalyst material 1046c used during the synthesis of the table 1046.

The remaining discussion and description of the present invention will be drawn, by way of example, to the planar face type of cutting element 1010, 2010, 2122, and 3010 shown in Figures 1, 11, & 12. It is understood, however, that the same general principals and outcomes will apply as well to the domed type cutting element 1032, as shown in Figure 3.

A cross section view of a preform cutting element of the prior art 1100 is shown in Figure 5 and a view of the prior art cutting element 1100, in use, is shown in Figure 6 to illustrate and contrast the present invention. The prior art cutting element 1100 shares many elements in common with the PCD cutting element 1010, 2010, 2122, and 3010 of the present invention, such as having a relatively thin front facing table 1022, 2022(in Fig. 11), 3022 (in Fig. 12) of diamond, bonded to a substrate 1024, 2024, 3024 of cemented tungsten carbide. All the cutting elements 1010, 2010, 2122, and 3010 have peripheral and end working surfaces 1028, 2028, 3028, and 1030, 2030, 3030. A layer 1102, 2102 of the facing table 1022, 2022, and 3022 in many of these cutting elements is treated in a manner such that the catalyzing material is substantially removed from a relatively thin layer adjacent to the end working surface 1030, 2030, 3030. Removal of the catalyzing material in this manner had been found to greatly increase the wear resistance of the cutting element, and to surprisingly increase its drilling rate.

Note, however, that the peripheral working surface 1028, 2028, and 3028 on the outside periphery 1104 on the prior art cutting element 1100 was initially not treated to remove the catalyzing material. The cutting element 1100 is operated in a manner as illustrated in Fig. 6. This is a typical representation in which the cutting element 1100 is operated at a backrake angle 1106 of from typically 10 to 45 degrees. When operated in this manner, the treated layer 1102 of the facing table 1102, 2022, and 3022 is presented to the earth formation 1108.

In the prior art cutter 1100, as shown in Figures 5 and 6, a single lip 1109 would often form as the cutter 1100 began to wear when drilling. The inventors believed that this lip 1109 formed because the layer 1102 had higher abrasion resistance than the other diamond material. What was not appreciated at the time of that invention was that this lip tended to increase the drilling rate of penetration by a factor of two and often more. The mechanism behind this increase in rate of penetration is believed to be the interaction of the lip 1109 with the earth formation 1108 during drilling. As drilling progresses, the underlying diamond wears from beneath the lip 1109 causing ever further protrusion. Once this protrusion reaches a critical amount the lip fractures. This changes the cutting geometry of the cutter 1100 in a manner that tends to make it self-sharpening - as when the lip fractures, the lines of stress cause a cup-shaped or crescent-shaped portion of the facing table to be lost. Until the lip re-forms, however, the cutters 1100 will not be as sharp, and at least for a period of time will not drill as efficiently. However, there are typically many of these cutters 1100 on a drill bit 1012 so the average drilling rate of penetration remains relatively stable. This is overall a more efficient cutting shape than the flats that tend to wear onto diamond tables of untreated cutters, however. As shown in Figures 5-7, the treated surface layer 1102 ended at the edge 1103 of the prior art cutter 1100, and it is at this edge 1103 that the lip 1109 forms.

It is further believed that the impact toughness of the cutter 1010, 2010, 2122, and 3010 is improved by providing a cavity 2000 (in Fig 10), 2002, 2004, 2006 (in Fig. 11), 3008 (in Fig. 12) which allows the treated portion of the cutter to extend to a second end working surface 2009, 3009A, 3009B, 3009C of the table of superhard material 1022, 2022, 3022, as will be described later. These are illustrated in Figs 10, 11 and 12.

In Figure 7, a cutter 1116 in later developed prior art has a layer 1030, 2030, 3030 which is treated in much the same manner as in the prior art cutters 1100 shown in Figures 5 and 6. However, in this cutter 1116 the treatment is applied additionally to the outside periphery 1124 of cutter 1116. It is preferred that this layer 1030, 2030, 3030 may be continuous across the face and periphery of the cutter, as shown. However, it is also possible to make a discontinuous layer as is known in the art. As shown in Figure 8, the representation of this cutter 1116 after drilling for a period of time, as the cutter wears, two lips 1110 form. This configuration had been shown to increase the drilling rate of penetration by as much as another 40% over the earlier the prior art cutter 1100- but otherwise similar in shape and mode of operation.

As mentioned hereinbefore, the treatment forms a relatively thin layer 1102, 2102 which is free of or substantially free of catalyzing material. The depth or thickness 1102a of the layer 1102, 2102 conveniently falls within the range of about 0.02 to about 0.70 mm, preferably about 0.15 to about 0.25 mm.

In this specification, when the term 'substantially free' is used referring to catalysing material 1046c in the interstices 1046a, or in a volume of the body 1010a, 2010a, 2122a, 3010a, it should be understood that many, if not all, the surfaces of the adjacent diamond crystals 1046b may still have a coating of the catalysing material 1046c. Likewise, when the term 'substantially free' is used referring to catalysing material 1046c on the surfaces of the diamond crystals 1046b, there may still be catalysing material 1046c present in the adjacent interstices 1046a.

In time, however, as shown in Figure 8, the prior art cutter 1116 wears until only a small part of the working surface 1028 has the lip 1110. The lifetime of this cutter 1116 is dependent, therefore upon the how far down the outside periphery 1124 the treatment extends, and the wear angle 1126. It is also dependent upon other factors including the rate of penetration and the interaction of the cutter with radially adjacent cutters. Wear angle 1126 is generally an angle complimentary to the backrake 1106 of the cutter, but may also be profoundly related to the type of formation drilled, the manner in which the drill bit is operated, and the thickness of the wear resistant layer.

There are numerous ways of producing wear resistant layers which produce lips 1110, as is now well known in the prior art - and as described for instance in pending GB Patent Application No. GB 0423597.4 filed on October 23, 2004, and its corresponding US Patent Application Serial No. 11/163323 filed on October 14, 2005 both entitled "Dual-Edge Working Surfaces for Polycrystalline Diamond Cutting Elements".

The PCD cutting elements 1010, 2010, 2122, 3010 may be also made incorporating encapsulated diamond material made using powdery carbonates and many other means, as are well known.

In Figures 10, 11 and 12, a cavity 2000, 2002, 2004, 2006 and 3008 is formed into the substrate 2024, 3024. This facilitates extending the treated layer 1102, 2102, which is substantially free of the catalyzing material, from the facing surface 1030, 2030, 3030 along at least a portion of the peripheral working surface 1028, 2028 and 3028 to the second end working surface 2009, 3009A, 3009B, 3009C of the table of superhard material 1022, 2022, 3022. Extending the surface 1030, 2030, 3030, 1028, 2028, 3028 in this manner further enhances the improvement in impact toughness of the cutter as previously described.

The method of manufacturing this cutting element starts by forming a table of superhard material bonded to a less hard substrate so that the table of superhard material defining a plurality of interstices containing a catalyzing material. The table also defines a first end working surface and a peripheral working surface.

A cavity is formed in the substrate in an area immediately adjacent the peripheral working surface and at least part of each of the end working surface and the peripheral working surface of the cutting element is treated to remove the catalyzing material therefrom to form a second end working surface of the table of superhard material which is exposed by the cavity formed in the substrate.

The cavity allows the peripheral working surface 1028, 2028, and 3028 to be treated to remove the catalyzing material therefrom all the way down the peripheral working surface 1028, 2028, and 3028 and around to the end surface 2009, 3009B, 3009C without interruption.

The invention encompasses, as well as the cutting element, a method of manufacture thereof. The method comprises forming a table of superhard material bonded to a substrate of a less hard material. The table defines a plurality of interstices containing a catalysing material. The end and peripheral working surfaces are defined by the table. The method involves treating at least part of the end working surface and at least part of the peripheral working surface to remove the catalysing material therefrom. The treatment may comprise a leaching operation.

Whereas the present invention has been described in particular relation to the drawings attached hereto, it should be understood that other and further modifications apart from those shown or suggested herein, may be made within the scope of the present invention.

## Claims

1. A cutting element comprising a table (3022) of superhard material bonded to a substrate (3024) of less hard material, the table (3022) of superhard material defining a plurality of interstices containing a catalysing material, the table (3022) of superhard material defining a first end working surface (3030) and a peripheral working surface (3028) extending to the substrate (3024) at least part of the first end working surface (3030) and at least a portion of the peripheral working surface (3028) are substantially free of catalysing material, and **characterised in that** the peripheral working surface (3028) is substantially free of catalysing material to a second end working surface (3009) of the table (3022) of superhard material which is exposed by a single cavity (3008) formed in the substrate (3024), the single cavity (3008) being formed about the entire periphery of the substrate (3024).

2. The cutting element of Claim 1, wherein the cavity (3008) is formed when the working surfaces are rendered substantially free of the catalysing material.

3. The cutting element of Claim 1 or Claim 2, wherein the first end working surface (3030) is substantially planar, and the peripheral working surface (3028) is substantially perpendicular thereto.

4. The cutting element of any of the preceding claims, wherein the peripheral working surface (3028) is of substantially frusto-conical form.

5. The cutting element of any of the preceding claims, wherein the superhard material is polycrystalline diamond.

6. The cutting element of any of the preceding claims, wherein the table (3022) of superhard material comprises regions of different abrasion resistance.

7. The cutting element of Claim 6, wherein the regions comprise a series of layers.

8. The cutting element of Claim 7, wherein the layers are continuous.

9. The cutting element of any of the preceding claims, wherein the table (3022) of superhard material incorporates encapsulated diamond material.

10. The cutting element of Claim 9, wherein the encapsulated diamond material is made with powdery carbonates.

11. The cutting element of any of the preceding claims, wherein a region of superhard material containing catalysing material is exposed between the parts of the peripheral working surface (3028) and the first end working surface (3030) which are substantially free of catalysing material.

12. The cutting element of Claim 11, wherein a first protruding lip is formed adjacent said region at an edge of the part of the first end working surface which is substantially free of catalysing material and a second protruding lip is formed adjacent said region at an edge of the part of the peripheral working surface which is substantially free of catalysing material.

13. The cutting element of Claim 11, wherein said region is formed by machining away material.

14. The cutting element of Claim 11, wherein said region is formed, in use, by part of the cutting element wearing.

15. The cutting element of Claim 11, wherein the said parts of the working surface which are substantially free of catalyzing material extend to a depth in the range of about 0.02 mm to about 0.70 mm.

16. The cutting element of Claim 15, wherein the said parts extend to a depth in the range of about 0.15 mm to about 0.25 mm.

17. A method of manufacturing a cutting element comprising forming a table (3022) of superhard material bonded to a less hard substrate (3024), the table (3022) of superhard material defining a plurality of interstices containing a catalyzing material, the table (3022) defining a first end working surface (3030) and a peripheral working surface (3028) and **characterised by**, forming a single cavity (3008) in the substrate in an area immediately adjacent the peripheral working surface (3028) formed about the entire periphery of the substrate (3024), and treating at least part of each of the end working surface (3030) and the peripheral working surface (3028) to remove the catalyzing material therefrom to form a second end working surface (3009) of the table (3022) of superhard material which is exposed by the cavity (3008) formed in the substrate (3024).

## Patentansprüche

1. Schneidelement, das eine Planscheibe (3022) aus einem superharten Material umfasst, die an ein Substrat (3024) aus einem weniger harten Material gebunden ist, wobei die Planscheibe (3022) aus einem superharten Material mehrere Zwischenräume definiert, die ein Katalysatormaterial enthalten, wobei die Planscheibe (3022) aus einem superharten Material eine erste Stirnarbeitsfläche (3030) und eine umlaufende Arbeitsfläche (3028), die sich bis zu dem Substrat (3024) erstreckt, definiert, wobei wenigstens ein Teil der ersten Stirnarbeitsfläche (3030) und wenigstens ein Abschnitt der umlaufenden Arbeitsfläche (3028) im Wesentlichen frei von Katalysatormaterial sind, und **dadurch gekennzeichnet, dass** die umlaufende Arbeitsfläche (3028) bis zu einer zweiten Stirnarbeitsfläche (3009) der Planscheibe (3022) aus einem superharten Material, die durch einen einzelnen in dem Substrat (3024) geformten Hohlraum (3008) freigelegt ist, im Wesentlichen frei von Katalysatormaterial ist, wobei der einzelne Hohlraum (3008) um den gesamten Umfang des Substrats (3024) geformt ist.

2. Schneidelement nach Anspruch 1, wobei der Hohlraum (3008) geformt wird, wenn die Arbeitsflächen im Wesentlichen frei von dem Katalysatormaterial gemacht werden.

3. Schneidelement nach Anspruch 1 oder Anspruch 2, wobei die erste Stirnarbeitsfläche (3030) im Wesentlichen eben ist und die umlaufende Arbeitsfläche (3028) im Wesentlichen senkrecht zu derselben ist.

4. Schneidelement nach einem der vorhergehenden Ansprüche, wobei die umlaufende Arbeitsfläche (3028) im Wesentlichen kegelstumpfförmig ist.

5. Schneidelement nach einem der vorhergehenden Ansprüche, wobei das superharte Material polykristalliner Diamant ist.

6. Schneidelement nach einem der vorhergehenden Ansprüche, wobei die Planscheibe (3022) aus einem superharten Material Bereiche mit unterschiedlicher Abriebfestigkeit umfasst.

7. Schneidelement nach Anspruch 6, wobei die Bereiche eine Reihe von Lagen umfassen.

8. Schneidelement nach Anspruch 7, wobei die Lagen durchgehend sind.

9. Schneidelement nach einem der vorhergehenden Ansprüche, wobei die Planscheibe (3022) aus einem superharten Material eingekapseltes Diamantmaterial einschließt.

10. Schneidelement nach Anspruch 9, wobei das eingekapselte Diamantmaterial, mit pulverförmigen Karbonaten hergestellt ist.

11. Schneidelement nach einem der vorhergehenden Ansprüche, wobei ein Bereich von superhartem Material, der Katalysatormaterial enthält, zwischen denjenigen Teilen der umlaufenden Arbeitsfläche (3028) und der ersten Stirnarbeitsfläche (3030), die im Wesentlichen frei von Katalysatormaterial sind, freigelegt ist.

12. Schneidelement nach Anspruch 11, wobei eine erste vorspringende Lippe angrenzend an denjenigen Bereich an einer Kante der ersten Stirnarbeitsfläche, der im Wesentlichen frei von Katalysatormaterial ist, geformt ist und eine zweite vorspringende Lippe angrenzend an denjenigen Bereich an einer Kante der umlaufenden Arbeitsfläche, der im Wesentlichen frei von Katalysatormaterial ist, geformt ist.

13. Schneidelement nach Anspruch 11, wobei der Bereich durch Wegspanen von Material geformt ist.

14. Schneidelement nach Anspruch 11, wobei der Bereich **dadurch** geformt ist, dass bei Anwendung ein Teil des Schneidelements verschleißt.

15. Schneidelement nach Anspruch 11, wobei sich diejenigen Teile der Arbeitsfläche, die im Wesentlichen frei von Katalysatormaterial sind, bis zu einer Tiefe in dem Bereich von etwa 0,02 mm bis etwa 0,70 mm erstrecken.

16. Schneidelement nach Anspruch 15, wobei sich die Teile bis zu einer Tiefe in dem Bereich von etwa 0,15 mm bis etwa 0,25 mm erstrecken.

17. Verfahren zum Herstellen eines Schneidelements, das umfasst, eine Planscheibe (3022) aus einem superharten Material zu formen, die an ein Substrat (3024) aus einem weniger harten Material gebunden ist, wobei die Planscheibe (3022) aus einem superharten Material mehrere Zwischenräume definiert, die ein Katalysatormaterial enthalten, wobei die Planscheibe (3022) eine erste Stirnarbeitsfläche (3030) und eine umlaufende Arbeitsfläche (3028) definiert, und **gekennzeichnet durch** Formen eines einzelnen Hohlraums (3008) in dem Substrat in einem Bereich angrenzend an die umlaufende Arbeitsfläche (3028), der um den gesamten Umfang des Substrats (3024) geformt ist, und Behandeln wenigstens eines Teils sowohl der Stirnarbeitsfläche (3030) als auch der umlaufenden Arbeitsfläche (3028), um das Katalysatormaterial daraus zu entfernen, um eine zweite Stirnarbeitsfläche (3009) der Planscheibe (3022) aus einem superharten Material zu formen, die **durch** den in dem Substrat (3024) geformten Hohlraum (3008) freigelegt ist.

## Revendications

1. Elément de coupe, comprenant une table (3022) de matériau superdur liée à un substrat (3024) composé d'un matériau moins dur, la table (3022) de matériau superdur définissant plusieurs interstices contenant un matériau catalyseur, la table (3022) de matériau superdur définissant une première surface de travail d'extrémité (3030) et une surface de travail périphérique (3028), s'étendant vers le substrat (3024), au moins une partie de la première surface de travail d'extrémité (3030) et au moins une partie de la surface de travail périphérique (3028) étant pratiquement exemptes de matériau catalyseur, et **caractérisé en ce que** la surface de travail périphérique (3028) est pratiquement exempte de matériau catalyseur, en direction d'une deuxième surface de travail d'extrémité (3009) de la table (3022) de matériau superdur, qui est exposée par une seule cavité (3008) formée dans le substrat (3024), la seule cavité (3008) étant formée autour de l'ensemble de la périphérie du substrat (3024).

2. Elément de coupe selon la revendication 1, dans lequel la cavité (3008) est formée lorsque les surfaces de travail sont rendues pratiquement exemptes de matériau catalyseur.

3. Elément de coupe selon les revendications 1 ou 2, dans lequel la première surface de travail d'extrémité (3030) est pratiquement plane, la surface de travail périphérique (3028) y étant pratiquement perpendiculaire.

4. Elément de coupe selon l'une quelconque des revendications précédentes, dans lequel la surface de travail périphérique (3028) a pratiquement une forme en tronc de cône.

5. Elément de coupe selon l'une quelconque des revendications précédentes, dans lequel le matériau superdur est un diamant polycristallin.

6. Elément de coupe selon l'une quelconque des revendications précédentes, dans lequel la table (3022) de matériau superdur comprend des régions présentant une résistance à l'abrasion différente.

7. Elément de coupe selon la revendication 6, dans lequel les régions comprennent une série de couches.

8. Elément de coupe selon la revendication 7, dans lequel les couches sont continues.

9. Elément de coupe selon l'une quelconque des revendications précédentes, dans lequel la table (3022) de matériau superdur incorpore un matériau de diamant encapsulé.

10. Elément de coupe selon la revendication 9, dans lequel le matériau de diamant encapsulé est produit avec des carbonates sous forme de poudre.

11. Elément de coupe selon l'une quelconque des revendications précédentes, dans lequel une région du matériau superdur contenant du matériau catalyseur est exposée entre les parties de la surface de travail périphérique (3028) et la première surface de travail d'extrémité (3030), qui sont pratiquement exemptes de matériau catalytique.

12. Elément de coupe selon la revendication 11, dans lequel un premier rebord en saillie est formé près de ladite région, au niveau d'un bord de la partie de la première surface de travail d'extrémité qui est pratiquement exempte de matériau catalyseur, un deuxième rebord en saillie étant formé près de ladite région, au niveau d'un bord de la partie de la surface de travail périphérique qui est pratiquement exempte de matériau catalyseur.

13. Elément de coupe selon la revendication 11, dans lequel ladite région est formée en éliminant du matériau par usinage.

14. Elément de coupe selon la revendication 11, dans lequel ladite région est formée en service par l'usure d'une partie de l'élément de coupe.

15. Elément de coupe selon la revendication 11, dans lequel lesdites parties de la surface de travail pratiquement exemptes de matériau catalyseur s'étendent à une profondeur comprise dans l'intervalle allant d'environ 0,02 mm à environ 0,70 mm.

16. Elément de coupe selon la revendication 15, dans lequel lesdites parties s'étendent à une profondeur comprise dans l'intervalle allant d'environ 0,15 mm à environ 0,25 mm.

17. Procédé de fabrication d'un élément de coupe, comprenant l'étape de formation d'une table (3022) de matériau superdur liée à un substrat composé d'un matériau moins dur (3024), la table (3022) de matériau superdur définissant plusieurs interstices contenant un matériau catalyseur, la table (3022) définissant une première surface de travail d'extrémité (3030) et une surface de travail périphérique (3028), et **caractérisé par** les étapes de formation d'une seule cavité (3008) dans le substrat, dans une région immédiatement adjacente à la surface de travail périphérique (3028) formée autour de l'ensemble de la périphérie du substrat (3024), et de traitement d'au moins une partie de chacune de la surface de travail d'extrémité (3030) et de la surface de travail périphérique (3028), pour éliminer le matériau catalyseur de celles-ci, pour former une deuxième surface de travail d'extrémité (3009) de la table (3022) de matériau superdur, exposée par la cavité (3008) formée dans le substrat (3024).
